Europäisches Patentamt

European Patent Office

Office européen des brevets

(19)

(11) EP 0 966 004 A2

## (12) EUROPEAN PATENT APPLICATION

(43) Date of publication:
22.12.1999 Bulletin 1999/51

(51) Int. Cl.⁶: $H01F\ 7/16$, $H02K\ 33/02$, $H02K\ 37/04$, $H02K\ 19/10$

(21) Application number: 99116911.1

(22) Date of filing: 27.09.1995

(84) Designated Contracting States:
DE FR GB IT

(62) Document number(s) of the earlier application(s) in accordance with Art. 76 EPC:
95115203.2 / 0 766 271

(71) Applicants:
• Ogino, Sanshiro
  Tokyo (JP)
• Asaoka, Keiichiro
  Atsugi-Shi, Kanagawa (JP)

(72) Inventors:
• Ogino, Sanshiro
  Tokyo (JP)

• Asaoka, Keiichiro
  Atsugi-Shi, Kanagawa (JP)

(74) Representative:
Dreiss, Fuhlendorf, Steimle & Becker,
Patentanwälte
Postfach 10 37 62
70032 Stuttgart (DE)

Remarks:
This application was filed on 27 - 08 - 1999 as a divisional application to the application mentioned under INID code 62.

(54) **Propulsion magnetic field generator and energy converter having a propulsion magnetic field generator**

(57) A propulsion magnetic field generator (110; 170) for generating propulsion magnetic fields in a specified working space (111A) is provided with:

- a plurality of permanent magnet members (121, 122,... 126; 181) set at suitable intervals in accordance with a required pattern for generating propulsion magnetic fields; and
- a plurality of magnetic flux control units made of electromagnets (131, 132,... 136; 191) provided in correspondence to the permanent magnet members (121, 122,... 126; 181),

wherein the number of magnetic fluxes formed from the permanent magnet members (121, 122,... 126; 181) in the working space (111A) is changed by shifting phases by means of the magnetic flux control units. Furthermore, an energy converter (200) is provided for converting magnetic field energy into kinetic energy by using this propulsion magnetic field generator (110; 170).

FIG. 3

EP 0 966 004 A2

## Description

### Background of the Invention

Field of the Invention

The present invention relates to a propulsion magnetic field generator for generating various propulsion magnetic fields by using a permanent magnet. The invention furthermore, relates to an energy converter for converting magnetic field energy into kinetic energy by using this propulsion magnetic field generator, in particular to an energy converter useful when implemented es a rotary motor, a linear motor or the like.

Prior Art

Conventionally, various energy converters utilizing permanent magnets haue been used. Typical of those which convert electrical energy into kinetic energy is a motor. In the case of a DC motor, a DC current is caused to flow to the coil of a rotor placed in a magnetic field generated by a permanent magnet and the rotor is rotary-driven by working with a magnetic field thus generated.

In an AC synchronizing motor or an AC inductive motor which has also been conventionally used, an exciting current is caused to flow by applying an AC voltage to an exciting coil provided in a magnetic pole of a stator with a required phase difference to generate a rotating magnetic field, and a rotor is rotated by being synchronized therewith. In the case of a linear motor, likewise, an exciting current is caused to flow by applying an AC voltage to a number of linearly arrayed exciting coils with a required phase difference, a straight advance magnetic field is generated and a propelling power is imparted to a magnetic movable body.

That is, a propulsion magnetic field generator used in a rotary motor, a linear motor and the like for generating a rotating magnetic field or a straight advance magnetic field has a structure designed to generate a propulsion magnetic field in a required direction by supplying an exciting current to a plurality of exciting coils with a phase difference.

However, the energy cornerters of these conventional types, represented by the above-described DC motor, are not structured to directly extract magnetic energy possessed by a permanent magnet to the outside and thus the energy converting efficiency thereof is relatively low.

Furthermore, in an energy converter such as a rotary motor, a linear motor and the like using a conventional propulsion magnetic field generator, since a rotational speed or a position moving speed is set with a phase difference of a propulsion magnetic field, this depends on the frequency of an AC power source, making it difficult to set a rotational speed at an potional value except for some motors such es a coil type inductive motor and the like, and thus generally the rotational speed is controlled by means of an inverter. However, this inverter generates high frequencies and consequently damages control equipment in the vicinity thereof. Moreover, in a conventional device, since a rotational force or a straight advancing force such as kinetic energy is in proportion to a current to be applied, it is necessary to provide power capacitance corresponding to the necessary torque, and for this reason it has been difficult to improve energy efficiency.

### Summary of the Invention

The present invention was made in view of the above-described problems, and it is an object of the invention to provide a new propulsion magnetic field generator using a permanent magnet capable of improving energy efficiency by utilizing the magnetic attraction driving engine.

It is another object of the invention to provide an energy cornerter for making a propulsion magnetic field such as a rotating magnetic field, a straight advance magnetic field or the like by indirectly extracting a magnetic flux of a permanent magnet and thereby actuating a magnetic body.

The invention is designed to intermittently or continuously extract the required mechanical energy from a permanent magnet by using an electromagnet as a means for switching magnetic fluxes from the permanent magnet when mechanical energy is to be made by utilizing the permanent magnet.

More specifically, a propulsion magnetic field generator for generating a propulsion magnetic field in a specified working space provided by the invention comprises the following:

- a plurality of permanent magnet members set at suitable intervals in accordance with a required pattern for generating propulsion magnetic fields; and
- a plurality of magnetic flux control units made of electromagnets provided in correspondence to the permanent magnet members.

The number of magnetic fluxes formed by the permanent magnet members in the working space is changed by shifting the phases of the magnetic fluxes by means of the magnetic flux control units.

The magnetic flux control equipments made of the electromagnets can be structured to wind a coil on a magnetic core, set one end of the magnetic core stuck or close to one magnetic pole end of a corresponding permanent magnet, control supplying of a current to the coil and change density of magnetic fluxes formed by one magnetic pole end of the permanent magnet in a required space. The propulsion magnetic field generator can form rotating magnetic fields by setting the permanent magnets on a specified circumference and straight advance magnetic fields by linearly setting the permanent magnets.

Furthermore, an energy converter of the invention is designed to pivotaly support a mover member freely rotatably or slidably in a working space of the propulsion magnetic filed generator and generate displacing torque in the mover member by a propulsion magnetic field formed by the propulsion magnetic field generator.

In the propulsion magnetic field generator, density of magnetic fluxes formed in a working space by a plurality of permanent magnets set in accordance with a predetermined pattern for generating propulsion magnetic fields is changed by magnetic flux control equipments made of electromagnets set corresponding to the permanent magnets shifting phases thereof, thereby forming predetermined propulsion magnetic fields in a working space. Therefore, if a freely rotatably supported rotor or a freely slidably supported mover such as a slider and the like is set in the working space, rotational or moving torque is generated by displacing propulsion magnetic fields formed therein.

A propulsion magnetic flux generator of the invention utilizing a magnetic attraction driving engine has a structure designed to generate required propulsion magnetic fields such as rotating magnetic fields and the like by controlling magnetic fluxes from permanent magnets by means of magnetic flux control equipments and magnetic force energy of the permanent magnets is ulitlized, and thus a highly efficient propulsion magnetic field generator can be provided.

Furthermore, in an energy converter utilizing the propulsion magnetic field generator, since a rotor, etc., can be moved by using a propulsion magnetic field generated with extremely high efficiency, efficiency of a motor, etc., can be improved.

Brief Description of the Drawings

Other features and advantages of the invention will be apparent from the following description taken in connection with the accompanying drawings wherein:

Fig. 1     is a view showing a structure of a rotational motor in a propulsion magnetic field generator in a first embodiment;

Fig. 2     is a wave form chart showing waveforms of first to third exciting voltages shown in Fig. 1;

Fig. 3     is a detailed circuit diagram of a control unit shown in Fig. 1;

Fig. 4     is a wave form chart of switching control signals shown in Fig. 3;

Fig. 5     is a main part structural view showing a state of connection between a permanent magnet in a fixed electrode and a magnetic core of an electromagnet in Fig. 1;

Fig. 6     is a view showing a structure of a rotational motor in a propulsion magnetic field generator in a second embodiment;

Fig. 7     is an expanded view of main parts in Fig. 6; and

Fig. 8     is a view showing a structure of an inductive motor in a propulsion magnetic field generator in a third preferred embodiment.

Detailed Description of the Preferred Embodiments

First Preferred Embodiment

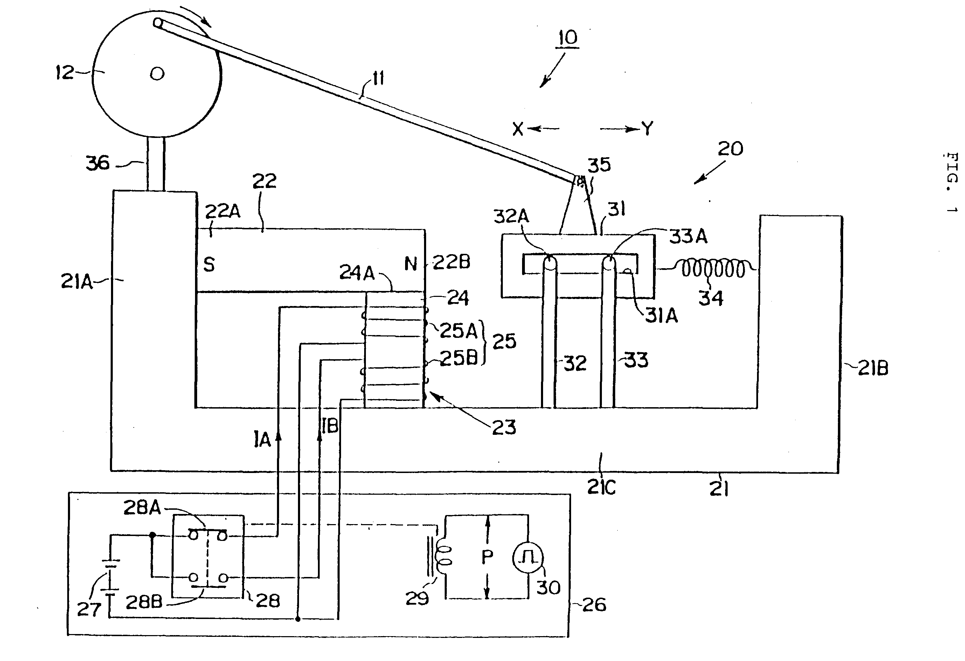

Fig. 1 shows a DC type rotational motor. A stator side device is structured by a rotational motor 110 having a cylindrical frame 111 made of a nonmagnetic material and a revolving magnetic field generator 120 set therein.

Inside the frame 111, a working space 111A is formed so as to generate a propulsion magnetic field rotated by the revolving magnetic field generator 120 and a rotor 112 made of a soft iron nonmagnetic material is axially provided freely rotatably in the working space 111a via a rotary shaft 113. The rotary shaft 113 is positioned in a center axis of the frame 111, both ends thereof are freely rotatably set and prevented from moving in a direction of the rotary shaft 113 and thus the rotor 112 rotates integrally with the rotary shaft 113 inside the frame 111.

The revolving magnetic field generator 120 is provided with six bar-shaped permanent magnets 121, 122, 123,... 126 having rectangular sections, and these permanent magnets 121, 122, 123,... 126 are set at equal spaces along an inner peripheral surface of the frame 111 with axises thereof lined up in a diameter direction of the frame 111. Signs 141, 142,... 146 indicate yoke members buried and fixed along an inner peripheral surface of the frame 111 as shown in the drawing and these are made of plate permalloy as a soft magnetic material. The yoke members 141, 142,... 146 are respectively set on positions P1, P2,... P6 of the permanent magnets 121, 122, 123,... 126 and fixed in the frame 111 (there is no limit to fixing means) so as to stick each one end of the permanent magnets 121, 122,... 126 to corresponding one of the yoke members 141, 142,... 146.

Soft magnetic materials used for the yoke members 141, 142,... 146 are not limitted to permalloy, and other kinds can be made use of.

In the above-described structure, N magnetic poles of the permanent magnets 121, 122 and 123 set an the positions P1, P2 and P3 are placed oppositely to the rotor 112 while S magnetic poles of the permanent magnets 124, 125 and 126 set on the positions P4, P5 and P6 are placed oppositely to the rotor 112. (magnetic polarity of a permanent magnet set on each position can be optionally selected not limited to one in the embodiment shown in the drawing)

Signs 131, 132,... 136 indicate electromagnets as magnetic flux control means for controlling magnetic fluxes formed from the permanent magnets 121, 122,...

126 in the working Space 111A and provided corresponding to each thereof. The electromagnets 131, 132,... 136 are respectively composed of L-shaped magnetic cores 131A, 132A,... 136A made of soft magnetic materials such as permalloy and the like and coils 131B, 132B,... 136B wound thereon. Each one end of the magnetic cores 131A, 132A,... 136A is stuck to one side surface of a free end of a corresponding permanent magnet and another end thereof is stuck to that of the yoke members 141, 142,... 146, and six stator side magnetic poles M1, M2,... M6 are formed in the frame 111.

Explanation will be made of a stator side magnetic pole M1.

Between N and S magnetic poles of the permanent nagnet 121, a magnetic path made of the yoke member 141 and the magnetic core 131A of the electromagnet 131 is formed. Therefore, in case where no current flows to the coil 131B or a current is applied thereto so that one end of the magnetic core 131A is an S magnetic pole, most of magnetic fluxes from the permanent nagnet 121 go through the closed magnetic path made of the yoke member 141 and the magnetic core 131A, work to return from the N magnetic pole to the S magnetic pole, and consequently magnetic fields by magnetic fluxes from the permanent magnet 131 are not formed in the working space 111A. (Hereinafter, this is called "a state of magnetic flux OFF").

On the other hand, if a current is applied to the coil 131B so that one end of the magnetic core 131A is an N magnetic pole, magnetic fluxes from the permanent magnet 121 are not allowed to pass through the closed nagnetic path made of the yoke member 141 and the magnetic core 131A. These magnetic fluxes return from the N magnetic pole through the working space 111A to the S magnetic pole, and consequently magnetic fields by magnetic fluxes from the permanent magnet 131 are formed in the working space 111A. (Hereinafter, this is called "a state of magnetic flux ON").

As described above, by controlling a current applied to the electromagnet 131, it is possible to control density of magnetic fluxes outputted from the permanent magnet 121 to the working space 111A and to switch ON/OFF magnetic fluxes outputted from the permanent magnet 131 to the working space 111A by the electromagnet 131. How the density of the magnetic fluxes of the permanent magnet 121 is controlled by the electromagnet 131 is described in greater detail in the European Patent Application 0 766 271.

As for other stator side magnetic poles M2, M3,... M6, it is also possible to switch ON/OFF magnetic fluxes outputted from the permanent magnets 122, 123,... 126 to the working space 111A by performing similar control with currents supplied to the electromagnets 132, 133,... 136.

A sign 150 indicates a control unit for controlling switching of exciting currents applied to the coils 131B, 132B,... 136B of the electromagnets 131, 132,... 136, and by switching ON/OFF magnetic fluxes from the permanent magnets for the stator side magnetic poles M1, M2,... M6 with a specified phase difference revolving magnetic fields are formed in the working space 111A. In the first embodiment, the control unit 150 is provided with a grounding terminal 150G and three output terminals 150A, 15OB and 150C, and three groups of exciting voltages, one including first, second and third exciting voltages A1, A2 and A3, having phases different from one another, are outputted therefrom.

In the revolving magnetic field generator 120, the coils 131B and 134B, the coils 132B and 135B and the coils 133B and 136B are respectively connected to each other in series. A first exciting current is supplied to the coils 131B and 134B, a second exciting current to the coils 132B and 135B and a third exciting current to the coils 133B and 136B.

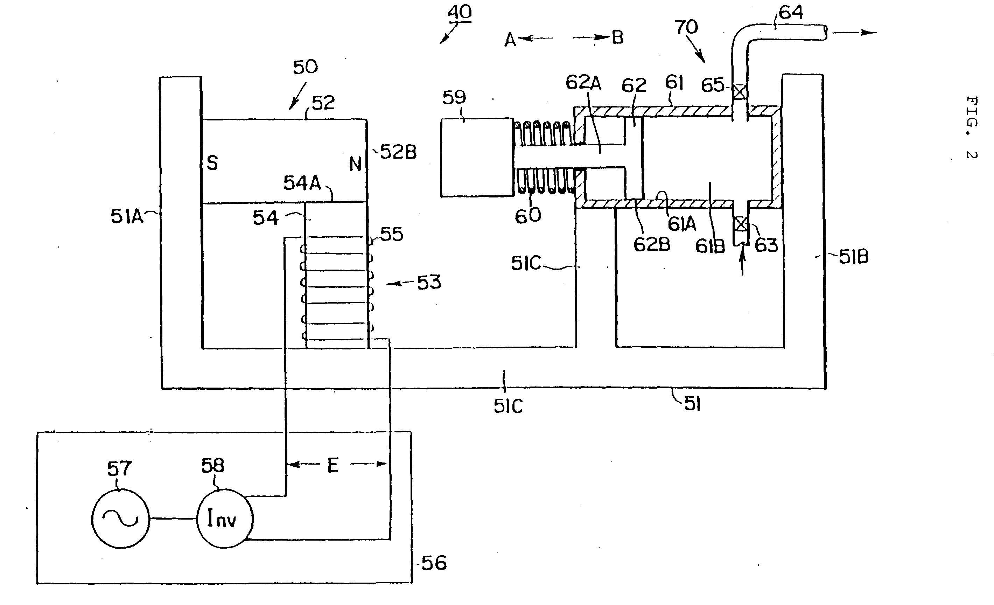

Fig. 2 shows exciting voltages phase-controlled by the control unit 150, first, second and third exciting voltages A1, A2 and A3 are repeating pulse voltages, each having a cycle T, by shifting a phase for a period of only 1/3 of one cycle an exciting voltage of a positive direction is supplied to any one of the phases and an exciting voltage of a negative direction is supplied to the remaining two phases.

When the first exciting voltage A1 is applied to the coils 131B and 134B with a positive polarity for a period of time T1 to T2, one end of the magnetic core 131A of the electromagnet 131 is excited to be an N magnetic pole and thereby a magnetic flux of the corresponding permanent magnet 121 is formed in the working space 111A. One end of the magnetic core 134A of the electromagnet 134 is excited to be an S magnetic pole at this time and thereby a magnetic flux of the corresponding permanent magnet 124 is formed in the working space 111A. That is, the stator side magnetic poles M1 and M4 are both in states of magnetic flux OFF. To the other coils 132B, 135B, 133B and 136B the second and third exciting voltages are applied with negative polarity. In this way, exciting currents are caused to flow to both electromagnets 132 and 135 so that one end of the magnetic core 132A of the electromagnet 132 is an S magnetic pole and one end of the magnetic core 135A of the electromagnet 135 is an N magnetic pole.

Also, exciting currents flow to both electromagnets 133 and 136 so that one end of the magnetic core 133A of the electromagnet 133 is an S magnetic pole and one end of the magnetic core 136A of the electromagnet 136 is an N magnetic pole. That is, since the stator side magnetic poles M2, M3, M5 and M6 are all in states of magnetic flux OFF, no magnetic fluxes are outputted from the permanent magnets 122, 123, 125 and 126 to the working space 111A.

As a result, since a magnetic flux from the N magnetic pole of the permanent magnet 121 of the stator side magnetic pole M1 is introduced through the rotor 112 into the S magnetic pole the permanent magnet 124 of the stator side magnetic pole M4, for instance a projected pole 112C of the rotor 112 is attracted into the stator side magnetic pole M1, a projected pole 112C thereof is attracted into the stator side magnetic pole M4 and the rotor 112 rotates clockwise shown in Fig. 1.

As can be understood from Fig. 2, by causing the stator side magnetic poles M1, M2,... M6 to be in states of magnetic flux ON, revolving magnetic fields are generated in the working space 111A, rotational torque is generated in the rotor 112 and then the rotor 112 is caused to continuously rotate in a specified direction.

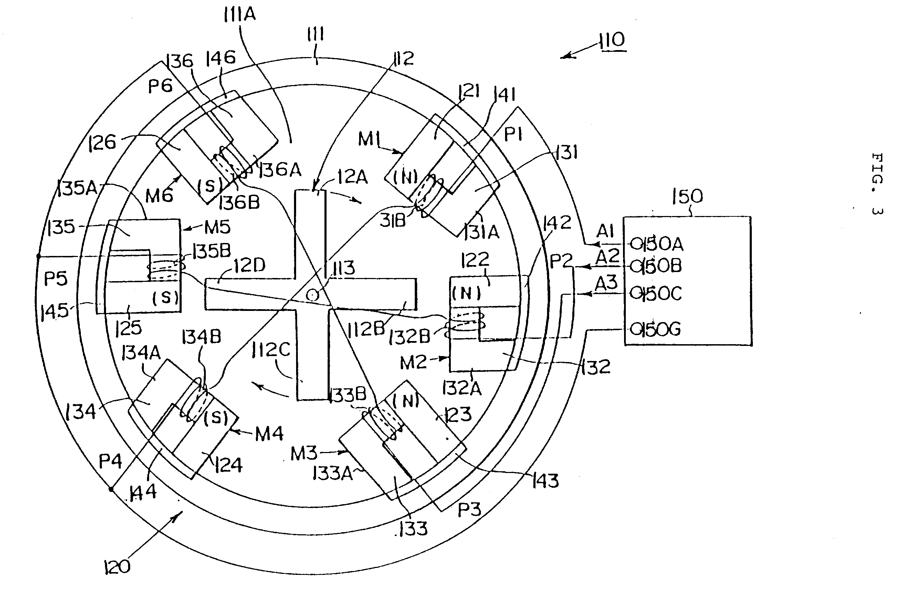

Fig. 3 is a detailed diagram showing a circuit for outputting a group of exciting voltages shown in Fig. 2. In the drawing, a sign 151 indicates a positive power source for supplying a positive voltage, a sign 152 a negative power source for supplying a negative voltage, signs 153, 154 and 155 switches, a sign 156 a pulse generator for outputting a pulse CL which becomes a high level for only a period of 1/3 of a cycle T shown in Fig. 2. The pulse CL is supplied to the switch 153 as a first switch control signal CA, a terminal 150A is connected to the positive power source 151 when the first switch control signal CA is a high level and the terminal 150A is connected to the negative power source 152 when the first switch control signal CA is a low level. As a result, a first exciting voltage AI shown in Fig. 2 can be supplied from the terminal 150A.

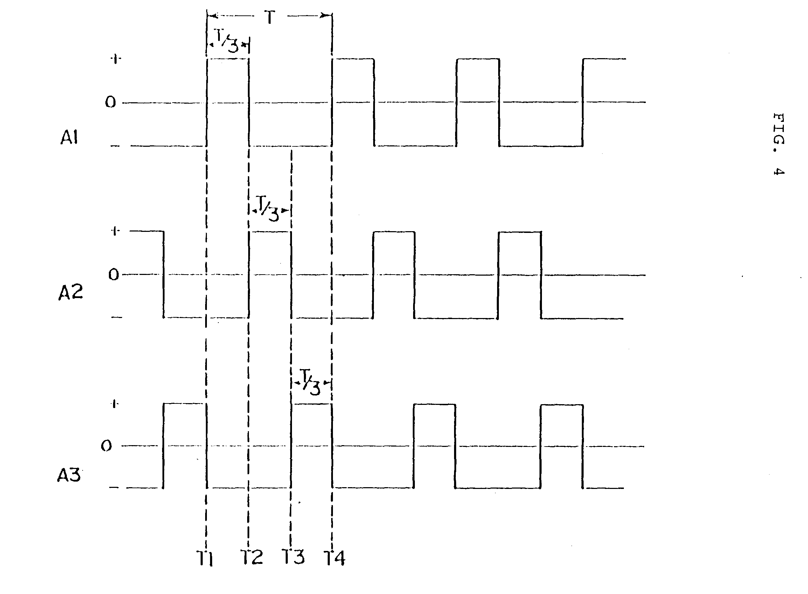

As shown in Fig. 4. the pulse CL is caused to be a second switch control signal CB delayed by a first delaying circuit 157 for giving delay of only 1/3 time of the cycle T and givent to the switch 154 as a signal for switching control. As in the case of the switch 153, the switch 154 is switched in accordance with a level of the second switch control signal CB and thus a second exciting voitage A2 shown in Fig. 2 can be supplied from a terminal 150B. A second delaying circuit 158 delays the pulse CL by a period of only 1/3 of the cycle T and outputs a third switch control signal CC shown in Fig. 4. The switch 155 works in response to the third switch control signal CC as in the cases of the other switches and thus a third exciting voltage A3 shown Fig. 2 can be supplied from a terminal 150C.

It is clear from the above description that that the switches 153, 154 and 155 shown in Fig. 3 indicate switching conditions during periods of T1 to T2 shown in Fig. 2.

Here, the number of magnetic fluxes $\Phi$ for determining strengths of the electromagnets 131, 132,... 136 necessary to switch ON/OFF magnetic fluxes of the stator side magnetic poles M1, M2,... M6 is proportional to a product between the number of winding a coil thereof and a current I supplied thereto and thus the following expression is obtained:

$$\Phi = k \, N \, I$$

Since the number of magnetic fluxes $\Phi$ neces-

sary for switching ON/OFF of magnetic fluxes of the permanent magnets 121, 122,... 126 is a specified constant value, a value of a current I for excitation can be made small if the number N of winding a coil on an electromagnet is set large. This makes it possible to conserve energy serially supplied from the positive and negative power sources 151 and 152 to the electromagnet 131, 132,... 136.

In the description of the first preferred embodiment, reference was made to case where a usual electromagnet is used. It is needless to say, however, that efficiency can be further improved by using superconductive magnets for the electromagnets 131, 132,.. 136.

In a nutshell, the rotational motor 110 of the invention is structured to generate revolving magnetic fields by switching ON/OFF magnetic fluxes from the permanent magnets and give rotational torque to the rotor 112 and thus it is very easy to design a space between the rotor 112 and the stator side. Since an inductive motor is a kind of trance, motor efficiency can be improved by making the space small. However, it is preferable in the rotational motor 110 of the invention that the space is designed to be sufficiently large in order to increase an initial attracting force. This consequently makes it possible to enlarge the space between the rotor 112 and the stator side in the rotational motor 110 and manufacture a motor having strong resistance to temperature increases.

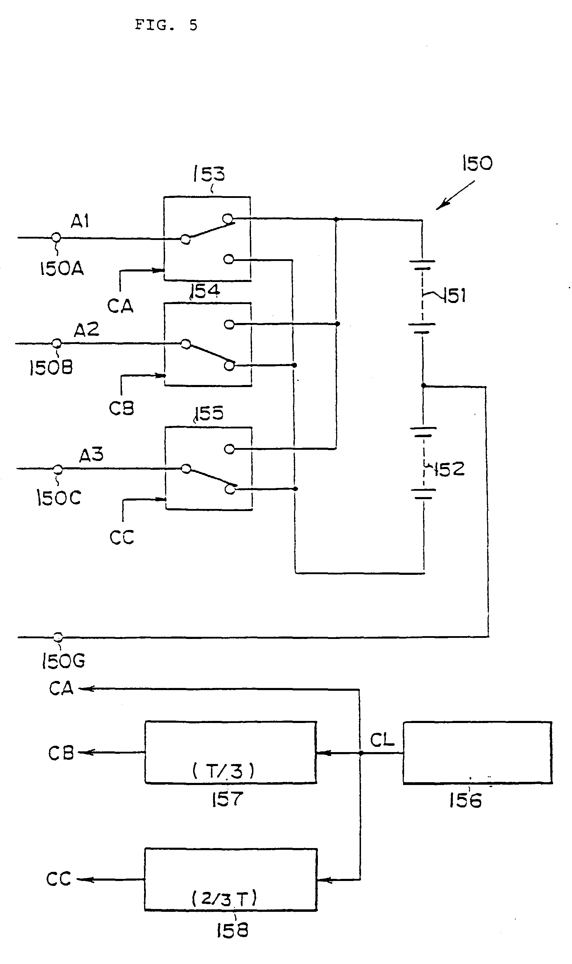

Fig. 5 shows in detail means for connecting a permanent magnet and an electromagnet in each stator side magnetic pole in the first embodiment. When magnetic fluxes are switched ON, a strong separating force is applied on both magnetic core and permanent magnet in the electromagnet by a repulsive force worked thereon, and thus taking the stator side magnetic pole M1 as an example, a free end 121a of the permanent magnet 121 and an end 131a of the magnetic core 131A of the electromagnet 131 stuck thereto are firmly bound to each other by a clamping member 160 so as to surely keep both in a closely adhered state.

Second Preferred Embodiment

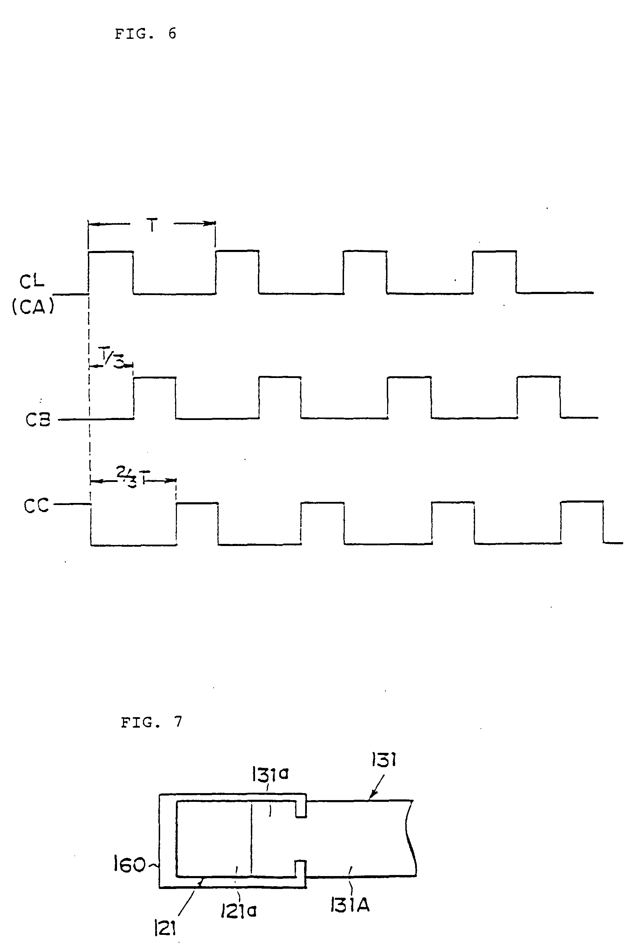

Fig. 6 shows a rotational motor in another embodiment of the invention. In this rotational motor 170, a revolving magnetic field generator 180 is provided in a fixed shaft 171, a cylindrical movable body 172 made of a magnetic material is axially provided freely rotatably so as to be coaxial with the fixed shaft 171 and magnetic projected poles 172A, 172B,... 172D are formed in the movable body 172. Eight stator side magnetic poles N1, N2,... N8 are set in a circumferential direction of the fixed shaft 171 at equal spaces and the magnetic projected poles 172A, 1728,... 172D are provided integrally with the movable body 172.

In the stator side magnetic pole N1, as shown in Fig. 7, a prismatic bar-shaped permanent magnet 181 like that in the first embodiment in Fig. 1 is fixed on the fixed shaft 171 so that axis thereof is orthogonal to an axis of the shaft 171 and an electromagnet 191 formed by winding a coil 191B on a U-shaped magnetic core 191A is provided as a magnetic flux controller.

End surfaces 191C and 191D of both legs of the magnetic core 191A are stuck to N and S magnetic parts of the permanent magnet 181, and this makes it possible to secure a magnetic path between one magnetic pole and other of the permanent magnet 181 without using a yoke member.

As for the other stator side magnetic poles N2, N3,... N8, structures are the same as the above.

In the second embodiment, as in the cases of the above-described embodiments, it is possible to switch ON/OFF magnetic fluxes from the permanent magnet 181 inside the movable body 172 as a working space by applying any one of exciting voltages to the coil 191B as explaned in Fig. 2. By performing switching ON/OFF of the magnetic fluxes with phase differences in the stator side magnetic poles N1, N2,... N8, it is possible to generate revolving magnetic fields, again as in the case of the first embodiment.

In case of the second embodiment, control is made to work one stator side magnetic pole as an N magnetic pole and another as an S magnetic pole with, for instance, stator side magnetic poles having spaces of 180° as one group, controls of this kind are sequentially executed in one round direction and thus revolving magnetic fields for rotating the movable body 171 can be generated.

Third Preferred Embodiment

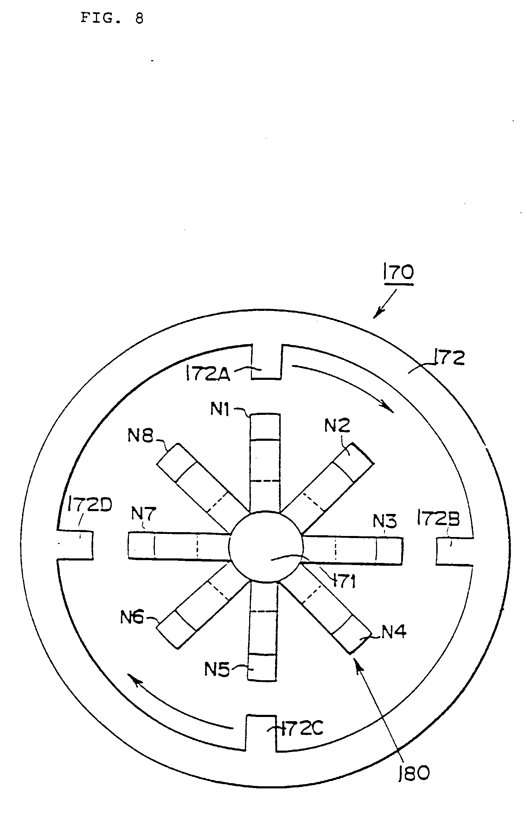

Fig. 8 shows still another preferred embodiment of the invention. In the third embodiment, an example of structuring an inductive motor by using a propulsion magnetic field generator of the invention is shown.

A structure of an inductive motor 200 in Fig. 8 is basically the same as a rotational motor 110 shown in Fig. 1 excpet that a rotor 201 is provided in a rotary shaft 113. Therefore, the same signs are given to those corresponding to parts shown in Fig. 1 and explanation thereof is omitted.

A revolving magnetic filed generator 220 provided in a frame 111 is structured basically in the same way as a revolving magnetic field generator 120 in the first embodiment shown in Fig. 1. However, this is different from the revolving magnetic field generator 120 in that auxilliary magnetic pole pieces 121K, 122K,... 126K are provided in free ends of permanent magnets 121, 122,... 126 for the purpose of making spaces between stator side magnetic poles M1, M2,... M6 and the rotor 201 as small as possible.

The auxiliary magnetic pole pieces 121K, 122K,... 126K are formed as projected pole parts having opposed parts 121L, 122L,... 126L having the same curvature surfaces as those on an outer peripheral surface of the rotor 201 and from these auxiliary magnetic pole pieces 121K, 122K,... 126K magnetic fluxes from corresponding permanent magnets are outputted to a working space 111A. To electromagnets 131, 132,... 136 of the stator side magnetic poles M1, M2,... M6, three-phase exciting voltages, i.e. first, second and third exciting voltages A1, A2 and A3, are supplied from a control unit 150 as in the case in Fig. 1 and in this way revolving magnetic fields are generated in the working space 111A.

In the inductive motor 200, inductive currents are generated in the rotor 201 by these revolving magnetic fields and the rotor 201 is caused to rotate by interaction between magnetic fields generated by these inductive currents and those by the stator side magnetic poles M1, M2,... M6. This rotational principle is the same as one for a conventional inductive motor.

However, since in the inductive motor 200 in the third embodiment a revolving magnetic field generator 220 generates required revolving magnetic fields in the working space 111A by utilizing magnetic force energy of the permanent magnet, it is possible to perform switching ON/OFF of magnetic fluxes by increasing the number of winding coils on the electromagnets and only by supplying small DC currents to the coils.

Furthermore, in the inductive motor of a conventional type, as energy supplied from an outside power source an exciting current I0 of a stator iron core and a torque current I1 for making magnetic fluxes to be transmitted to rotor torque were necessary. According to the invention, however, supplying of an exciting current I0 is not necessary and thus highly efficient driving can be expected.

As many apparently widely different embodiments of this invention may be made without departing from the spirit and scope thereof, it is to be understood that the invention is not limited to the specific embodiments thereof except as defined in the appended claims.

**Claims**

1. A propulsion magnetic field generator (110; 170) for generating propulsion magnetic fields in a specified working space (111A) comprising:

   - a plurality of permanent magnet members (121, 122,... 126; 181) set at suitable intervals in accordance with a required pattern for generating propulsion magnetic fields; and
   - a plurality of magnetic flux control units made of electromagnets (131, 132,... 136; 191) provided in correspondence to the permanent magnet members (121, 122,... 126; 181),

   wherein the number of magnetic fluxes formed from the permanent magnet members (121, 122,... 126; 181) in the working space (111A) is changed by shifting phases by means of the magnetic flux control units.

2. An energy converter (200) having a propulsion magnetic field generator (110; 170) for generating a propulsion magnetic field in a specified working space (111A) and a mover member (201) provided in the working space (111A) for generating displacing torque in the mover member (201) by means of a propulsion magnetic field formed in the working space (111A) by the propulsion magnetic field generator (110; 170), wherein the propulsion magnetic filed generator (110; 170) is provided with a plurality of permanent magnets (121, 122,... 126; 181) set at suitable intervals in accordance with a required pattern for generating propulsion magnetic fields and a plurality of magnetic flux control units made of electromagnets (131, 132,... 136; 191) set corresponding to the permanent magnets (121, 122,... 126; 181) and the number of magnetic fluxes formed from the permanent magnets (121, 122,... 126; 181) in the working space (111A) is changed by shifting phases by means of the magnetic flux control units.

FIG. 1

FIG. 2

FIG. 3

FIG. 4

FIG. 5

FIG. 6

FIG. 7

FIG. 8